# EUROPÄISCHE PATENTSCHRIFT

(11) **EP 0 818 549 B1**
(45) Veröffentlichungstag und Bekanntmachung des Hinweises auf die Patenterteilung: **04.02.2004**
(21) Anmeldenummer: 97109429.7
(22) Anmeldetag: 11.06.1997
(51) Int. Cl.: C22C 19/05, C23C 4/08

(54) **Werkstoff in Pulver- oder Drahtform auf Nickelbasis für eine Beschichtung sowie Verfahren dazu**
Nickel-based material in powder- or wireform for coating as well as the processes thereof
Matériau à base de nickel en forme de poudre ou de fil pour un revêtement ainsi que les procédés correspondants

(30) Priorität: 25.06.1996 DE 19625218; 13.07.1996 DE 19628346
(43) Veröffentlichungstag der Anmeldung: 14.01.1998
(73) Patentinhaber: CASTOLIN S.A., 1025 Lausanne - St. Sulpice (CH)
(72) Erfinder: Heath, Gary Robert, Dr., 1001 Lausanne (CH); Heimgartner, Peter, Dr., 1025 St. Sulpice (CH); Kretschmer, Ingo, Dr., 1028 Preverenges (CH)
(74) Vertreter: Schön, Theodor, Patent- und Zivilingenieur

(56) Entgegenhaltungen:
- EP-A- 0 223 135
- WO-A-85/00127
- DE-A- 3 241 377
- GB-A- 826 780

## Beschreibung

Die Erfindung betrifft einen Werkstoff in Pulver- oder Drahtform auf Nickelbasis zum Herstellen einer Beschichtung mittels eines thermischen Beschichtungsverfahrens. Zudem erfaßt die Erfindung Verfahren zum Auftragen eines solchen Werkstoffes.

Die Verwendung von Nickelbasis-Legierungen mit Zusätzen von Chrom und Molybdän zum Verschleiß- sowie Korrosionsschutz sind seit langem bekannt und werden in vielen Industriezweigen zum thermischen Spritzen und Schweißen mit Erfolg eingesetzt.

So beschreibt etwa die US-A-4325995 eine größere Anzahl von Legierungen auf Nickelbasis mit Zusätzen wie Chrom, Molybdän, Bor, Silizium und anderen Komponenten. Auch der USA-3999952 sind Legierungen im Legierungsbereich von 5 bis 15 Gew.-% B; 5 bis 50 Gew.-% Cr; 1 bis 50 Gew.-% Mo; 20 bis 96 Gew.-% Fe zu entnehmen, die zudem zusätzlich 1 bis 50% Ni enthalten können.

Betrachtet man diese beiden Schriften -- oder DE-A-2556 960 und DE-A-3823140 -so stellt man fest, daß sie vornehmlich das Beschichten oder das Erzeugen von Sinterkörpern erörtern. Bei diesen vorbekannten Legierungen wird auf ihre gute Korrosionsbeständigkeit hingewiesen.

GB-A-826780 beschreibt für Legierungen auf Nickelbasis mit Bestandteilen an C, Cr, Fe, Si, B, Cu, Mo zum Spritzen mit anschließendem Einschmelzen einen Molybdän-Bereich von 3 bis 10 %. Als typischer Mo-Gehalt werden zudem 4,5 bis 5,5 % Mo bzw. 4,5 bis 5 % genannt.

Der EP 0223135 Al ist ein mengenmäßig etwas höheres Mo-Legierungsfeld zu entnehmen, das jedoch stets an einen Zusatz von mindestens 0,5 % bis 18 % W gekoppelt ist. Der bevorzugte W-Gehalt ist 1 bis 4 %, kombiniert mit C Gehalten von mindestens 0,5 % bis 1,0 %, was korrosionschemisch negativ wirkt. Als Negativbeispiel gegenüber den Wolfram enthaltenden Legierungen wird eine sehr rissanfällige Legierung ohne Wolfram herausgestellt, die sich bei Korrosions- und Verschleissbeanspruchung sehr ungünstig verhält.

In Kenntnis dieses Standes der Technik hat sich der Erfinder das Ziel gesetzt, derartige Legierungszusammensetzungen weitergehend zu verbessern und vor allem deren Verschleißund Korrosionsbeständigkeit über das bisher bekannte Maß hinauszuheben.

Zur Lösung dieser Aufgabe führen die Lehren der unabhängigen Patentansprüche; die Unteransprüche geben günstige Ausgestaltungen an.

Dank der Erfindung wurde es in der Tat möglich, Legierungen herzustellen und mit diesen Beschichtungen durchzuführen, deren Verschleiß- und Korrosionsbeständigkeit weit über diese Eigenschaften bekannter Legierungen hinausreichen. Dies ergibt sich wohl durch den Zusatz von Kupfer in einem bestimmten Legierungsbereich der Zusatzelemente Molybdän, Chrom, Kohlenstoff, Bor sowie Silizium und zwar in folgenden Bereichen (jeweils in Gewichts-%)

| | |
|---|---|
| C | 0,01 - 0,05; |
| Cr | 14,0 - 20,0; |
| Mo | 10,0 - 18,0; |
| Fe | 0,5 - 5,0; |
| B | 4,0 6,5; |
| Si | 1,5 - 3,5; |
| Cu | 0,1 - 4,0; |
| Ni | Rest. |

insbesondere

| | |
|---|---|
| C | 0,05 - 0,3; |
| Cr | 15,0 - 18,0 |
| Mo | 12,0 - 16,0; |
| Fe | 2,0 - 4;0; |
| Si | 4,5 - 5,5; |
| B | 2,0 - 3,0; |
| Cu | 2.0 - 3,0; |
| Ni | Rest |

Der Beschichtungswerkstoff wird bevorzugt in Pulverform eingesetzt und kann dann zudem mit einem Ni-B-Si-Pulver und/oder einem Ni-Cr-B-Si-Pulver gemischt werden.

Im Rahmen der Erfindung liegt auch ein Verfahren zum Auftragen eines erfindungsgemäßen Werkstoffes zum Herstellen von Beschichtungen hoher Korrosions- und Verschleißbeständigkeit auf einem Werkstück durch ein thermisches Beschichtungsverfahren, bei dem der pulverförmige Beschichtungswerkstoff legiert und aus dem Schmelzfluß verdüst oder aber aus verschiedenen legierten und nicht legierten Metallpulvern agglomeriert wird.

Zudem hat es sich als günstig erwiesen, den Beschichtungswerkstoff als Fülldraht oder als legiertes und gegossenes Stabmaterial einzusetzen.

Das Auftragen des erfindungsgemäßen Werkstoffes kann durch thermisches Spritzen mittels eines Plasmapulver-Auftragsschweißverfahrens, eines Flammspritzverfahrens mit nachträglichem Einschmelzen, eines Flammspritzverfahrens -- insbesondere eines Hochgeschwindigkeits-Flammspritzverfahrens --, eines Lichtbogenzweidraht-Spritz-Verfahrens oder mit einem Lichtbogenschweiß-Verfahren erfolgen.

Versuche haben gezeigt, daß eine auf die beschriebene Weise erzeugte Beschichtung bevorzugt die folgenden Einsatzfälle ermöglicht:
∗ als Hochtemperatur-Schutzschicht;
∗ als Korrosions-Schutzschicht;
∗ als Verschleiß-Schutzschicht.

Diese Schutzschichten dienen dem Verschleiß- und Korrosionsschutz in der chemischen Industrie oder der pharmazeutischen Industrie, in der Papier-Industrie, in der Glas-Industrie oder in der Kunststoffe verarbeitenden Industrie.

Weitere Vorteile, Merkmale und Einzelheiten der Erfindung ergeben sich aus der nachfolgenden Beschreibung bevorzugter Ausführungsbeispiele.

### BEISPIEL 1:

Eine an der Oberfläche sehr stark korrodierte Wellenschonerbüchse für ein Rührwerk der Papier-Industrie sollte durch Flammspritzen und nachträgliches Einschmelzen mit einer selbstfließenden pulverförmigen Legierung hoher Verschleiß- und Korrosionsbeständigkeit beschichtet werden. Die Zusammensetzung der ausgewählten Legierung war (in Gew.-%):

| | |
|---|---|
| C | 0,1; |
| Cr | 16,5; |
| Mo | 13,2; |
| Fe | 4, 5; |
| B | 3,5; |
| Si | 5,0; |
| Cu | 1,5; |
| Ni | Rest. |

Nach dem Reinigen und Abdrehen der korrodierten Oberfläche wurde diese durch Strahlen mit Korund einer Kornverteilung zwischen 0,3 und 0,6 mm vorbereitet sowie anschließend eine Schicht einer Schichtdicke von 1,4 mm mit einem autogenen Flammspritzbrenner aufgespritzt. Nach dem Aufspritzen wurde die Schicht mit einem autogenen Einschmelzbrenner eingeschmolzen und -- um Risse zu vermeiden -- langsam abgekühlt.

Die beschichtete Wellenschonerbüchse wurde nach dem Abkühlen auf Raumtemperatur durch Drehen und Schleifen auf eine Oberflächenrauhigkeit von 3 µm Ra bearbeitet. An der Schichtoberfläche konnten optisch keine Fehler festgestellt werden.

Nach der für die nichtbeschichtete Wellenschonerbüchse bekannten maximalen Laufzeit wurde die -- wie vorstehend dargestellt -- beschichtete ausgebaut. Bei der Kontrolle der Beschichtung konnte nach dieser Laufzeit ein Korrosionsangriff nicht festgestellt werden.

### BEISPIEL 2:

Der Pumpenschaft einer Pumpe in einer Chemieanlage, die durch das in dieser verarbeitete Medium -- und die darin enthaltenen ausgefällten Salzkristalle -- einer sehr starken Korrosions- und Verschleißbeanspruchung unterworfen war, mußte wegen dieser Beanspruchung der Pumpenwelle nach etwa zwei Wochen Laufzeit ausgetauscht werden.

Nun sollte versucht werden, diese sehr kurze Laufzeit durch eine Beschichtung zu verlängern. Da das Bauteil relativ wärmeempfindlich ist, mußte eine Schicht ohne Einschmelzen aufgebracht werden, weshalb als Beschichtungsverfahren das Hochgeschwindigkeits-Flammspritzen (HVOF) herangezogen wurde.

Der für diese Beschichtung ausgewählte pulverförmige Spritzwerkstoff hatte die folgende chemische Zusammensetzung (in Gew. -%) :

| | |
|---|---|
| C | 0,4; |
| Cr | 18,2; |
| Mo | 16,1; |
| Fe | 4,1; |
| B | 2,1; |
| Si | 5, 5; |
| Cu | 3,0; |
| Ni | Rest. |

Nach Vorbereitung der zu beschichtenden Oberfläche durch Abstrahlen mit Siliziumkarbid wurde diese mit einer HVOF-Pistole unter Verwendung des ausgewählten pulverförmigen Spritzwerkstoffes 0,3 mm dick beschichtet; die Temperatur des Teiles lag während des Beschichtungsvorganges bei 80°C.

Die fertig bearbeitete Schicht hatte auf dem Pumpenschaft eine Schichtdicke von 0,2 mm bei sehr guter Oberflächengüte.

Wie bei einem Betriebsversuch festgestellt, wurde durch die aufgebrachte Beschichtung die Standzeit des Pumpenschaftes um das 3-fache erhöht.

### BEISPIEL 3:

Ein Zwischenlagerbehälter eines Durchmessers von 2,50 m und einer Tiefe von 3,0 m für Zelluloselösungen in einer Papierfabrik sollte gegen Korrosion geschützt werden. Angesichts der Dimensionen des Zwischenlagerbehälters wurde das Zweidraht-Lichtbogenspritzverfahren wegen seines relativ hohen Spritzwerkstoff-Durchsatzes vorgeschlagen, um die Stillstandzeit für das Beschichten zu verkürzen.

Als Spritzzusatzwerkstoff wurden Fülldrähte eines Durchmessers von 1,6 mm verwendet. Die Zusammensetzung der aufgespritzten Schicht (in Gew.-%) war folgende:

| | |
|---|---|
| C | 0,5; |
| Cr | 17,0; |
| Mo | 15,2; |
| Fe | 3,0; |
| B | 2,5; |
| Si | 4,5; |
| Cu | 3,0. |

Die Vorbereitung der zu beschichtenden Oberfläche erfolgte durch Strahlen mit Korund einer Korngröße zwischen 0,6 und 0,8 mm. Sofort nach der Vorbereitung wurde die Fläche unter Verwendung einer Bewegungseinrichtung für die Spritzpistole halbautomatisch gespritzt. Die Spritzparameter waren:

| | |
|---|---|
| Stromstärke | 200 A; |
| Spannung | 32 V; |
| Druck der Zerstäubungsluft | 4,5 bar; |
| Spritzwerkstoffdurchsatz | 8 kg/h; |
| Spritzabstand | 200 bis 250 mm. |

Die Schichtdicke betrug nach dem Spritzen 1,2 mm. Um die Rauhigkeit der entstandenen Schicht zu mindern, wurde nach dem Beschichten die Oberfläche leicht geschliffen. Die fertige Schicht hatte keine sichtbaren Fehler oder Risse.

Das Ergebnis der Behandlung war sehr zufriedenstellend, jedoch können über längerfristige Resultate beim Einsatz bis jetzt keine Aussagen gemacht werden.

## Patentansprüche

1. Werkstoff in Pulver- oder Drahtform mit Bestandteilen an C, Cr, Fe,Si, B, Cu auf Nickelbasis zum Beschichten mittels eines thermischen Beschichtungsverfahrens bei dem ein pulver- oder drahtförmiger Wekstoff zum Herstellen einer Beschichtung hoher Korrosions- und Verschleißbeständigkeit eine Zusammensetzung in den folgenden Abgrenzungen (in Gew.-%) aufweist
| | |
|---|---|
| C | 0,01 - 0,05; |
| Cr | 14,0 - 20,0; |
| Mo | 10,0 - 18,0; |
| Fe | 0,5 - 5,0; |
| Si | 4,0 - 6,5; |
| B | 1,5 - 3,5; |
| Cu | 0,1 - 4,0; |
| Ni | Rest. |

2. Werkstoff nach Anspruch 1, bei dem der pulver- oder drahtförmige Werkstoff eine Zusammensetzung in den Abgrenzungen (in Gew.-%) aufweist:
| | |
|---|---|
| C | 0,05 - 0,3; |
| Cr | 15,0 - 18,0; |
| Mo | 12,0 -16,0; |
| F | 2,0 - 4,0; |
| Si | 4,5 - 5,5; |
| B | 2,0 - 3,0; |
| Cu | 2,0 - 3,0; |
| Ni | Rest. |

3. Werkstoff nach einem der Ansprüche 1 und 2, der in einer insbesondere zum Flammspritzen und nachträglichen Einschmelzen mit einer selbstfließenden pulverförmigen Legierung geeigneten Form folgende Zusammensetzung (in Gew.-%) aufweist:
| | |
|---|---|
| C | 0,1; |
| Cr | 16,5; |
| Mo | 13,2; |
| Fe | 4,5; |
| Si | 5,0; |
| B | 3,5; |
| Cu | 1,5; |
| Ni | Rest. |

4. Werkstoff nach einem der Ansprüche 1 bis 3, der pulverförmig ist und insbesondere zum Auftragen durch Hochgeschwindigkeits-Flammspritzen von folgender chemischer Zusammensetzung (in Gew.-%) ist:
| | |
|---|---|
| C | 0,4; |
| Cr | 18,2; |
| Mo | 16,1; |
| Fe | 4,1; |
| Si | 5,5; |
| B | 2,1; |
| Cu | 3,0; |
| NI | Rest |

5. Werkstoff nach einem der Ansprüche 1 und 2, der als Fülldraht insbesondere beim Auftragen im Zweidraht-Lichtbogenspritzverfahren eine aufgespritzte Schicht folgender Zusammensetzung (in Gew.-%) bildet:
| | |
|---|---|
| C | 0,5; |
| Cr | 17,0; |
| Mo | 15,2; |
| Fe | 3,0; |
| Si | 4.5; |
| B | 2,5; |
| Ci | 3,0; |

6. Verfahren zum Auftragen eines Werkstoffes nach einem der Ansprüche 1 bis 5, zum Herstellen von Beschichtungen hoher Korrosions- und Verschleißbeständigkeit auf einem Werkstück durch ein thermisches Beschichtungsverfahren, bei dem der pulverförmige Beschichtungswerkstoff legiert und aus dem Schmelzfluß verdüst wird, **gekennzeichnet durch** einen mit einem Ni-B-Si-Pulver und/oder einem Ni-Cr-B-Si-Pulver gemischten pulverförmigen Werkstoff.

7. Verfahren zum Auftragen eines Werkstoffes nach einem der Ansprüche 1 bis 8, zum Herstellen von Beschichtungen hoher Korrosions- und Verschleißbeständigkeit auf einem Werkstück durch ein thermisches Beschichtungsverfahren, bei dem der pulverförmige Beschichtungswerkstoff aus verschiedenen legierten und nicht legierten Metallpulvern agglomeriert wird, **gekennzeichnet durch** einen mit einem Ni-B-Si-Pulver und/oder einem Ni-Cr-BSi-Pulver gemischten pulverförmigen Werkstoff.

8. Verfahren zum Auftragen eines Werkstoffes nach einem der Ansprüche 1 bis 8, mittels eines Verfahrens nach Anspruch 6 oder 7, durch thermisches Spritzen.

9. Verfahren nach Anspruch 8, **dadurch gekennzeichnet, daß** das Werkstück mittels eines Plasmapulver-Auftragsschweißver-fahrens beschichtet wird.

10. Verfahren nach Anspruch 9, **dadurch gekennzeichnet, daß** das Werkstück mittels eines Flammspritzverfahrens, insbeson-dere mittels eines Hochgeschwindigkeits-Flammspritzver-fahrens, beschichtet wird oder mittels eines Flamm-spritzverfahrens mit nachträglichem Einschmelzen.

11. Verfahren nach Anspruch 8, **dadurch gekennzeichnet, daß** das Werkstück mittels eines Lichtbogenzweidraht-Spritz- verfahrens oder mittels eines Lichtbogenschweiß-Verfahrens beschichtet wird.

## Claims

1. Nickel-based material in powdered or wire form with the components C, Cr, Fe, Si, B, Cu for coating by means of a thermal coating process; wherein a powdered or wire material for the manufacture of a highly corrosion-resistant and wear-resistant coating provides a composition within the following limits (percentage by weight):
| | |
|---|---|
| C | 0.01 - 0.05; |
| Cr | 14.0 - 20.0; |
| Mo | 10.0 - 18.0; |
| Fe | 0.5 - 5.0; |
| Si | 4.0 - 6.5; |
| B | 1.5 - 3.5; |
| Cu | 0.1 - 4.0; |
| Ni | remainder |

2. Material according to claim 1, wherein the powdered or wire material provides a composition within the following limits (percentage by weight):
| | |
|---|---|
| C | 0.05 - 0.03; |
| Cr | 15.0 - 18.0; |
| Mo | 12.0 - 16.0; |
| Fe | 2.0 - 4.0; |
| Si | 4.5 - 5.5; |
| B | 2.0 - 3.0; |
| Cu | 2.0 - 3.0; |
| Ni | remainder |

3. Material according to any one of claims 1 and 2, which provides the following composition in a form which is particularly suitable for flame spraying and subsequent sealing with a self-fluxing powdered alloy (percentage by weight):
| | |
|---|---|
| C | 0.1; |
| Cr | 16.5; |
| Mo | 13.2; |
| Fe | 4.5; |
| Si | 5.0; |
| B | 3.5; |
| Cu | 1.5; |
| Ni | remainder |

4. Material according to any one of claims 1 to 3 in powdered form, particularly for application by high-velocity flame-spraying, which provides the following chemical composition (percentage by weight):
| | |
|---|---|
| C | 0.4; |
| Cr | 18.2; |
| Mo | 16.1; |
| Fe | 4.1; |
| Si | 5.5; |
| B | 2.1; |
| Cu | 3.0; |
| Ni | remainder |

5. Material according to any one of claims 1 and 2, which forms a sprayed coating of the following composition especially when applied as a cored wire in a twin-wire arc-spraying process (percentage by weight):
| | |
|---|---|
| C | 0.5; |
| Cr | 17.0; |
| Mo | 15.2; |
| Fe | 3.0; |
| Si | 4.5; |
| B | 2.5; |
| Cu | 3.0; |

6. Methcd for applying a material according to any one of claims 1 to 5 in order to manufacture highly corrosion-resistant and wear-resistant coatings on the workpiece using a thermal coating process, wherein the powdered coating material is alloyed and sprayed from the complete fusion, **characterised by** a mixed powdered material with an Ni-B-Si powder and/or an Ni-Cr-B-Si powder.

7. Method for applying a material according to any one of claims 1 to 8 in order to manufacture highly corrosion-resistant and wear-resistant coatings on the workpiece using a thermal coating process, wherein the powdered coating material is agglomerated from various alloyed and non-alloyed metal powders, **characterised by** a mixed powdered material with an Ni-B-Si powder and/or an Ni-Cr-B-Si powder.

8. Method for applying a material according to any one of claims 1 to 8 using a method according to claim 6 or 7 by means of thermal spraying.

9. Method according to claim 8, **characterised in that** the workpiece is coated by means of a plasma-powder surface-layer welding process.

10. Method according to claim 9, **characterised in that** the workpiece is coated by means of a flame-spraying process, especially by means of a high-velocity flame-spraying process, or by means of a flame-spraying process with subsequent sealing.

11. Method according to claim 8, **characterised in that** the workpiece is coated by means of a twin-wire arc-spraying process or by means of an arc-welding process.

## Revendications

1. Matériau sous forme de poudre ou de fil avec constituants de C, Cr, Fe, Si, B, Cu à base de nickel pour le revêtement au moyen d'un procédé de revêtement thermique dans lequel un matériau sous forme de poudre ou de fil pour la production d'un revêtement à haute résistance contre la corrosion et l'usure présente une composition comprise dans les limites suivantes (en pourcentage pondéral)
| | |
|---|---|
| C | 0,01-0,05; |
| Cr | 14,0-20,0 ; |
| Mo | 10,0-18,0 ; |
| Fe | 0,5- 5,0; |
| Si | 4,0- 6,5 ; |
| B | 1,5- 3,5 ; |
| Cu | 0,1- 4,0 ; |
| Ni | le reste. |

2. Matériau selon la revendication 1, le matériau sous forme de poudre ou de fil présentant une composition comprise dans les limites suivantes (en pourcentage pondéral) :
| | |
|---|---|
| C | 0,05- 0,03 ; |
| Cr | 15,0- 18,0 ; |
| Mo | 12,0- 16,0 ; |
| Fe | 2,0- 4,0 ; |
| Si | 4,5- 5,5 ; |
| B | 2,0- 3,0: |
| Cu | 2,0- 3,0 ; |
| Ni | le reste. |

3. Matériau selon l'une des revendications 1 et 2, qui, dans une forme appropriée en particulier à l'injection à la flamme puis à l'incorporation par fusion avec un alliage pulvérulent à auto-écoulement, présente la composition suivante (en pourcentage pondéral) :
| | |
|---|---|
| C | 0,1 |
| Cr | 16,5 |
| Mo | 13,2 |
| Fe | 4,5 |
| Si | 5,0 |
| B | 3,5 |
| Cu | 1,5 |
| Ni | le reste. |

4. Matériau selon l'une des revendications 1 à 3, qui est pulvérulent et convient en particulier pour le dépôt par une injection à la flamme à grande vitesse de composition chimique suivante (en pourcentage pondéral) :
| | |
|---|---|
| C | 0,4 |
| Cr | 18,2 |
| Mo | 16,1 |
| Fe | 4,1 |
| Si | 5,5 |
| B | 2,1 |
| Cu | 3,0 |
| Ni | le reste. |

5. Matériau selon l'une des revendications 1 et 2, qui en tant que fil de remplissage en particulier en cas de dépôt par un procédé de pulvérisation à l'arc à deux fils forme une couche déposée par pulvérisation de composition suivante (en pourcentage pondéral) :
| | |
|---|---|
| C | 0,5 |
| Cr | 17,0 |
| Mo | 15,2 |
| Fe | 3,0 |
| Si | 4,5 |
| B | 2,5 |
| Cu | 3,0 |
| Ni | le reste. |

6. Procédé de dépôt d'un matériau selon l'une des revendications 1 à 5, pour la production de revêtements de haute résistance à la corrosion et à l'usure sur une pièce d'oeuvre par un procédé de revêtement thermique, dans lequel le matériau de revêtement pulvérulent est allié et est vaporisé à partir du produit fondu,
**caractérisé par**
un matériau pulvérulent mélangé avec une poudre de Ni-B-Si et/ou une poudre de Ni-Cr-B-Si.

7. Procédé de dépôt d'un matériau selon l'une des revendications 1 à 5, pour la production de revêtements de haute résistance à la corrosion et à l'usure sur un outil par un procédé de revêtement thermique, dans lequel le matériau de revêtement pulvérulent constitué de diverses poudres métalliques alliées et non alliées est aggloméré,
**caractérisé par**
un matériau pulvérulent mélangé avec une poudre de Ni-B-Si et/ou une poudre de Ni-Cr-B-Si.

8. Procédé de dépôt d'un matériau selon l'une des revendications 1 à 5, au moyen d'un procédé selon la revendication 6 ou 7, par pulvérisation thermique.

9. Procédé selon la revendication 8,
**caractérisé en ce que**
la pièce d'oeuvre est revêtue au moyen d'un procédé de soudure avec dépôt de poudre de plasma.

10. Procédé selon la revendication 9,
**caractérisé en ce qu'**
on revêt la pièce d'oeuvre au moyen d'un procédé de pulvérisation à la flamme, en particulier au moyen d'un procédé de pulvérisation à la flamme à grande vitesse ou au moyen d'un procédé de pulvérisation à la flamme avec ensuite incorporation par fusion.

11. Procédé selon la revendication 8,
**caractérisé en ce qu'**
on recouvre la pièce d'oeuvre au moyen d'un procédé de pulvérisation à deux fils à arc ou au moyen d'un procédé de soudure à l'arc.
